(19) Europäisches Patentamt
European Patent Office
Office européen des brevets

(11) EP 4 321 561 A1

(12) EUROPEAN PATENT APPLICATION
published in accordance with Art. 153(4) EPC

(43) Date of publication:
**14.02.2024 Bulletin 2024/07**

(21) Application number: **22825398.5**

(22) Date of filing: **20.06.2022**

(51) International Patent Classification (IPC):
***C08J 3/12*** (2006.01) ***C08J 3/24*** (2006.01)
***C08J 3/075*** (2006.01) ***C08F 220/06*** (2006.01)
***B29B 9/12*** (2006.01) ***C08F 2/01*** (2006.01)

(52) Cooperative Patent Classification (CPC):
**B29B 9/12; C08F 2/01; C08F 220/06; C08J 3/075; C08J 3/12; C08J 3/24**

(86) International application number:
**PCT/KR2022/008723**

(87) International publication number:
**WO 2022/265475 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 KR 20210079644**
**21.06.2021 KR 20210080230**

(71) Applicant: **LG Chem, Ltd.**
**Seoul 07336 (KR)**

(72) Inventors:
- **LEE, Seul Ah**
**Daejeon 34122 (KR)**
- **MIN, Yoon Jae**
**Daejeon 34122 (KR)**
- **AHN, Gyunhyeok**
**Daejeon 34122 (KR)**
- **KIM, Gicheul**
**Daejeon 34122 (KR)**
- **PARK, Hee Kwan**
**Daejeon 34122 (KR)**
- **MIN, Kyunghoon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) PREPARATION METHOD OF SUPER ABSORBENT POLYMER AND SUPER ABSORBENT POLYMER

(57) The present disclosure relates to a method for preparing a super absorbent polymer, and more particularly to a method for preparing a super absorbent polymer in which polymerization can be stably progressed by a continuous process in the polymerization stage

【FIG. 1】

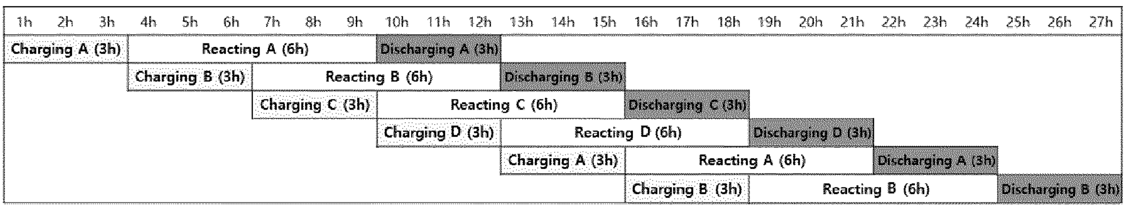


EP 4 321 561 A1

## Description

### [TECHNICAL FIELD]

CROSS-REFERENCE TO RELATED APPLICATION(S)

This application claims the benefit of Korean Patent Application No. 10-2021-0079644 filed on June 18, 2021 and Korean Patent Application No. 10-2021-0080230 filed on June 21, 2021 in the Korean Intellectual Property Office, the entire contents of which are incorporated herein by reference.

The present disclosure relates to a preparation method of super absorbent polymer.

### [BACKGROUND ART]

Super absorbent polymer (SAP) is a synthetic polymer material capable of absorbing moisture from about 500 to about 1,000 times its own weight, and each manufacturer has denominated it as different names such as SAM (Super Absorbency Material), AGM (Absorbent Gel Material) or the like. Such super absorbent polymers started to be practically applied in sanitary products, and now they are widely used for preparation of water retaining soil products for gardening, water stop materials for the civil engineering and construction, sheets for raising seedling, fresh-keeping agents for food distribution fields, materials for poultice or the like.

Such a super absorbent polymer has been widely used mainly in the field of sanitary materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the content of pulp is reduced or pulp is not used at all is being actively advanced.

As described above, in the case of hygienic materials in which the content of pulp is reduced or the pulp is not used, a super absorbent polymer is contained at a relatively high ratio and these super absorbent polymer particles are inevitably contained in multiple layers in the hygienic materials. In order for the whole super absorbent polymer particles contained in the multiple layers to absorb liquid such as urine more efficiently, the super absorbent polymer needs to basically exhibit not only high absorption performance but also fast vortex time.

Meanwhile, the super absorbent polymer is generally prepared through the step of polymerizing a monomer to prepare a hydrogel polymer containing a large amount of moisture, and the step of drying the hydrogel polymer and then pulverizing the hydrogel polymer into polymer particles having a desired particle size.

However, when the size of a polymerization reactor is increased in order to increase the production volume in the polymerization process, there is a problem that the polymerization of the monomer does not proceed uniformly and thus the physical properties of the resulting super absorbent polymer are not uniformly formed.

In addition, when the hydrogel polymer undergoes the process of pulverization after drying, a large number of fines are generated, which may deteriorate the physical properties of the finally prepared super absorbent polymer. In order to reuse such fines, however, it is common to mix fines with water, aggregate the fines to produce a fine reassembly, and then add the fine reassembly produced through processes such as drying/pulverization/classification.

However, due to water used at this time, the amount of energy used during the drying process increases, and problems such as an increase in load on the device may occur, thereby lowering the productivity of the super absorbent polymer.

Therefore, there is a need for continuous development of a technique that can reduce the generation of fines in the production process while increasing the production volume of the super absorbent polymer without degrading its physical properties.

### [DETAILED DESCRIPTION OF THE INVENTION]

### [Technical Problem]

It is an object of the present disclosure to provide a method for preparing a super absorbent polymer that i) the prepared super absorbent polymer can be pulverized to a normal particle level without aggregation between particles, ii) improves the gel strength of the hydrogel to facilitate discharge, and iii) can greatly increase the production volume of the super absorbent polymer without degrading the physical properties of the super absorbent polymer.

### [Technical Solution]

According to one embodiment of the present disclosure, there is provided a method for preparing a super

absorbent polymer, comprising the steps of: polymerizing a monomer composition containing a water-soluble ethylenically unsaturated monomer having an acidic group, an internal crosslinking agent, and a polymerization initiator to form a polymer in which the water-soluble ethylenically unsaturated monomer having an acid group and the internal crosslinking agent are subjected to a crosslinking polymerization (step 1); neutralizing at least a part of the acidic group of the polymer to form a hydrogel polymer (step 2); micronizing the polymer in the presence of a surfactant (step 3); and drying the neutralized and micronized polymer to prepare dried super absorbent polymer particles (step 4), wherein the internal crosslinking agent comprises i) a polyfunctional acrylate-based compound, and ii) any one or more of a polyfunctional allyl-based compound and a polyfunctional vinyl-based compound.

According to another embodiment of the present disclosure, there is provided a super absorbent polymer prepared by the method for preparing a super absorbent polymer.

**[Advantageous Effects]**

According to the preparation method of a super absorbent polymer of the present disclosure, it is possible to prepare a super absorbent polymer composed of super absorbent polymer particles having a desired particle size without aggregation between the pulverized particles.

Also, as the polymer is dried uniformly using a moving drying type and then pulverized, the amount of fines generated during the preparation of the super absorbent polymer can be remarkably reduced.

In addition, as it has a high molecular weight polymer, a uniform particle size distribution, and a low water-soluble component (EC) content, it is possible to provide a super absorbent polymer that is excellent in all of various absorption properties such as a centrifuge retention capacity, an absorbency under pressure, a liquid permeability, a rewet property and a vortex time.

Further, the production volume can be increased without deteriorating the physical properties of the prepared super absorbent polymer.

**[BRIEF DESCRIPTION OF THE DRAWINGS]**

Figs. 1 and 2 are diagrams which schematically show a continuous batch preparation method according to an aspect of the present disclosure.

**[DETAILED DESCRIPTION OF THE EMBODIMENTS]**

The terms used herein are for the purpose of describing exemplary embodiments only and are not intended to limit the present disclosure. The singular expressions include a plurality of expressions unless expressly stated otherwise in the context. It will be further understood that the terms "comprises", "provides" and/or "has," as used herein specify the presence of stated features, steps, or components, or combinations thereof, but do not exclude the presence or addition of one or more other features, steps, components, or combinations thereof.

The present disclosure can be variously modified and may have various forms, and thus specific embodiments are illustrated and described in detail below. However, the present disclosure is not limited to the specific embodiments and should be construed as including all the changes, equivalents, and substitutions included in the spirit and scope of the present disclosure.

Hereinafter, a preparation method of a super absorbent polymer and a super absorbent polymer according to a specific embodiment of the present disclosure are described in more detail.

Prior to the description, the terms used herein are for the purpose of mentioning specific exemplary embodiments only and are not intended to limit the present disclosure. And, the singular expressions used herein include a plurality of expressions unless expressly stated otherwise in the context.

According to an embodiment of the present disclosure, there is provided a method for preparing a super absorbent polymer, comprising the steps of: polymerizing a monomer composition containing a water-soluble ethylenically unsaturated monomer having an acidic group, an internal crosslinking agent, and a polymerization initiator to form a polymer in which the water-soluble ethylenically unsaturated monomer having an acid group and the internal crosslinking agent are subjected to a crosslinking polymerization (step 1); neutralizing at least a part of the acidic group of the polymer to form a hydrogel polymer (step 2); micronizing the polymer in the presence of a surfactant (step 3); and drying the neutralized and micronized polymer to prepare dried super absorbent polymer particles (step 4), wherein the internal crosslinking agent comprises i) a polyfunctional acrylate-based compound, and ii) any one or more of a polyfunctional allyl-based compound and a polyfunctional vinyl-based compound.

After the step 4, the method may include a step of pulverizing the dried super absorbent polymer particles to prepare super absorbent polymer particles (step 5).

The term "polymer" or "high molecule" as used herein means a state where a water-soluble ethylenically

unsaturated monomer is polymerized, and may include all water content ranges, or all particle size ranges.

Further, the term "super absorbent polymer" means a crosslinked polymer, or a base polymer in the form of powder made of super absorbent polymer particles in which the crosslinked polymer is pulverized, according to the context, or it is used to include those made in a state suitable for the productization by subjecting the crosslinked polymer or base polymer to additional processes, for example, drying, pulverization, classifying, surface crosslinking, etc.

Further, the term "fines" means particles having a particle size of 150 μm or less among the super absorbent polymer particles. The particle size of the polymer particles may be measured according to the European Disposables and Nonwovens Association standard EDANA WSP 220.3.

Further, the term "chopping" refers to cutting the hydrogel polymer into small pieces with a millimeter unit in order to increase the drying efficiency, and is used in distinction from being pulverized to a normal particle level.

Further, the term "micronizing (micronization)" refers to pulverizing the hydrogel polymer to a particle size from several tens to several hundreds of micrometers, and is used in distinction from "chopping".

Further, the term "multiple batch reactors" may mean a plurality of separate reactors in a form separated from each other, or may mean a reactor in a form in which only compartments are divided within a single reactor.

Conventionally, super absorbent polymers have been prepared by a method including the following steps:

(polymerization) performing a crosslinking polymerization of a water-soluble ethylenically unsaturated monomer having an acid group of which at least a part is neutralized in the presence of an internal crosslinking agent and a polymerization initiator to form a hydrogel polymer;
(chopping) chopping the hydrogel polymer;
(drying) drying the chopped hydrogel polymer; and
(pulverizing/classifying) classifying the dried polymer into normal particles and fines after pulverization.

As mentioned above, the chopped hydrogel polymer has an aggregated gel form with a size of about 1 cm to 10 cm, and such chopped hydrogel polymer is laminated on a belt of which the bottom is formed with a punching plate, and dried by hot air supplied from the lower portion or the upper portion. Since the polymer dried by the drying method exhibits a plate-like shape rather than a particle shape, the step of classifying after pulverization has been performed through the steps of coarsely pulverizing and then classifying the produced particles to become normal particles, that is, particles having a particle size from 150 μm to 850 μm, and then finely pulverizing the particles and classifying them. Since the amount of fines separated in the final classification step according to such a preparation method is large around about 20 wt.% to about 30 wt.% with respect to the total weight of the final prepared super absorbent polymer, the separated fines were mixed with an appropriate amount of water, the fines were reassembled, and then reused by a method of injecting them into the chopping step or the pre-drying step.

However, when re-charging the fines reassembly mixed with water into the pulverization or drying process for reuse of the fines, there have been problems such as causing an increase in device load and/or energy consumption, and the fines remaining without being classified caused deterioration of the physical properties of the super absorbent polymer.

In this regard, the present inventors have grasped that the amount of fines generated in the conventional preparation method has a large influence in the pulverizing process, and focused attention on that in the pulverization step of the polymer, a surfactant and a neutralizing agent are added, and the polymer is post-neutralized, and aggregation is controlled simultaneously while finely pulverizing, i.e., micronizing than conventional ones, to produce particles in the form of aggregated fine particles, whereby the amount of fines generated during the preparation process can be remarkably reduced.

Meanwhile, a method of charging a surfactant in order to lower the adhesiveness of the hydrogel polymer in the chopping step has been proposed. However, when a surfactant is charged into the chopping step, there is a problem that due to the high water content of the hydrogel polymer, the surfactant permeates inside the hydrogel polymer instead of existing at the interface of the hydrogel polymer, so that the surfactant cannot properly perform its role.

Therefore, since the chopped particles form particles of several mm or several cm level as compared to the polymer before chopping, the surface area may be increased to some extent, but it is difficult to expect the effect enough to effectively improve the vortex time. In this regard, in order to improve the vortex time, a method of increasing the surface area by further increasing the mechanical force and kneading in the chopping step can be considered, but in this case, aggregation occurs excessively due to the stickiness peculiar to the polymer, and amorphous single particles having irregularities only on the particle surface are formed after chopping, drying and pulverization, and the content of water-soluble components can rather increase due to excessive mixing or kneading.

The present inventors have conducted extensive research to solve the above-mentioned problems, and as a result, found that, unlikely a conventional preparation method of a super absorbent polymer which performs a polymerization in a state in which the acidic group of the water-soluble ethylenically unsaturated monomer is neutralized, when first performing a polymerization in a state where the acidic groups are not neutralized to form a polymer, micronizing

the hydrogel polymer in the presence of a surfactant and then neutralizing the acid groups of the polymer, or when neutralizing the acidic groups of the polymer to form a hydrogel polymer and then micronizing the hydrogel polymer in the presence of a surfactant, or when neutralizing the acidic groups present in the polymer simultaneously with the micronizing, the surfactant is present in a large amount on the surface of the polymer and the high adhesiveness of the polymer is lowered, thereby capable of sufficiently performing the role of preventing the polymer from being excessively aggregated and adjusting the aggregation state to a desired level.

Therefore, the polymer is prepared into secondary particles in a form in which primary particles are aggregated, and then pulverization and drying processes are performed under mild conditions, thereby capable of remarkably reducing the amount of fines generated during the process.

Further, when the polymer is micronized in the presence of the surfactant, the hydrophobic functional group portion contained in the surfactant imparts hydrophobicity to the surface of the pulverized super absorbent polymer particles to alleviate a frictional force between particles and increase an apparent density of the super absorbent polymer, and the hydrophilic functional group portion contained in the surfactant can also be bonded to the super absorbent polymer particles to prevent a surface tension of the resin from being lowered. Thereby, the super absorbent polymer prepared according to the above-mentioned preparation method can have a higher apparent density value while exhibiting the same level of surface tension as compared to a resin that does not use a surfactant.

In addition, when polymerization is first performed in a non-neutralized state to form a polymer and then the acidic groups present in the polymer is neutralized, longer chain polymer can be formed and the crosslinking is incomplete, so that the effect of reducing the content of water-soluble components present in a non-crosslinked state can be achieved.

The water-soluble component has the property of being easily eluted when the super absorbent polymer comes into contact with a liquid. Therefore, if the content of water-soluble components is high, most of the dissolved water-soluble components remain on the surface of the super absorbent polymer, which makes the super absorbent polymer sticky and causes a decrease in liquid permeability. Therefore, it is important to keep the content of water-soluble components low from the viewpoint of liquid permeability.

According to one embodiment of the present disclosure, as the polymerization is performed in a non-neutralized state, the content of water-soluble components is lowered, thereby capable of improving the liquid permeability of the super absorbent polymer.

Moreover, the super absorbent polymer prepared according to an embodiment of the present disclosure can have a uniform particle size distribution, thereby providing a super absorbent polymer that is excellent in various absorption properties such as centrifuge retention capacity and absorbency under pressure, a rewet property, a vortex time, and the like.

Hereinafter, the preparation method of the super absorbent polymer according to one embodiment will be described in more detail for each step.

## Step 1: Polymerization Step

First, a monomer composition containing a water-soluble ethylenically unsaturated monomer having an acidic group, an internal crosslinking agent, and a polymerization initiator is polymerized to form a polymer in which the water-soluble ethylenically unsaturated monomer having an acid group and the internal crosslinking agent are subjected to a crosslinking polymerization.

The above step may include a step of mixing a water-soluble ethylenically unsaturated monomer having an acid group, an internal crosslinking agent, and a polymerization initiator to prepare a monomer composition, and a step of polymerizing the monomer composition to form a polymer.

And, the step of forming the polymer can be performed by continuous batch polymerization.

The water-soluble ethylenically unsaturated monomer can be any monomer commonly used for the preparation of a super absorbent polymer. As a non-limiting example, the water-soluble ethylenically unsaturated monomer can be a compound represented by the following Chemical Formula 1:

[Chemical Formula 1] R-COOM'

wherein, in Chemical Formula 1,

R is an alkyl group having 2 to 5 carbon atoms containing an unsaturated bond, and
M' is a hydrogen atom, a monovalent or divalent metal, an ammonium group or an organic amine salt.

Preferably, the monomer may be one or more selected from the group consisting of (meth)acrylic acid, and monovalent (alkali) metal salts, divalent metal salts, ammonium salts and organic amine salts of these acids.

When a (meth)acrylic acid and/or a salt thereof is used as the water-soluble ethylenically unsaturated monomer

in this way, a super absorbent polymer having improved water absorptivity can be obtained, which is thus advantageous. In addition, as the monomer, maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, (meth)acrylamide, N-substituted (meth)acrylate, 2-hydroxyethyl(meth)acrylate, 2-hydroxypropyl(meth)acrylate, methoxypolyethyleneglycol(meth)acrylate, polyethyleneglycol(meth)acrylate, (N,N)-dimethylaminoethyl(meth)acrylate, (N,N)-dimethylaminopropyl(meth)acrylamide, and the like can be used.

Here, the water-soluble ethylenically unsaturated monomer has an acidic group. As described above, in the preparation of the conventional super absorbent polymer, a hydrogel polymer was formed by performing a crosslinking polymerization of a monomer in which at least a part of the acidic groups are neutralized by a neutralizing agent. Specifically, in the step of mixing the water-soluble ethylenically unsaturated monomer having an acidic group, an internal crosslinking agent, a polymerization initiator and a neutralizing agent, at least a part of the acidic group of the water-soluble ethylenically unsaturated monomer were neutralized.

However, according to one embodiment of the present disclosure, polymerization is first performed in a state in which the acid group of the water-soluble ethylenically unsaturated monomer is not neutralized, thereby forming a polymer.

The water-soluble ethylenically unsaturated monomer (e.g., acrylic acid) in a state in which the acidic group is not neutralized is in a liquid state at room temperature, and has high miscibility with a solvent (water), and thus exists as a mixed solution in the monomer composition. However, the water-soluble ethylenically unsaturated monomer in which the acidic group is neutralized is in a solid state at room temperature, has different solubility depending on the temperature of the solvent (water), and has lower solubility as the temperature is lower.

The water-soluble ethylenically unsaturated monomer in a state in which the acidic group is not neutralized has a higher solubility or miscibility in a solvent (water) than the monomer in which the acidic group is neutralized, and does not precipitate even at a low temperature, so it is advantageous for performing a polymerization at a low temperature for a long time. Therefore, the water-soluble ethylenically unsaturated monomer in which the acidic group is not neutralized can be polymerized for a long period of time to stably form a polymer having a higher molecular weight and a uniform molecular weight distribution.

In addition, longer chain polymer can be formed and the polymerization and crosslinking are incomplete, thereby achieving the effect of reducing the content of water-soluble components present in a non-crosslinked state.

Further, in this manner, when first performing a polymerization in a state where the acidic groups are not neutralized to form a polymer and micronizing the hydrogel polymer in the presence of a surfactant after neutralization, or when micronizing the hydrogel polymer in the presence of a surfactant and neutralizing it, or when neutralizing the acidic groups present in the polymer simultaneously with the micronizing, the surfactant is present in a large amount on the surface of the polymer, thereby capable of sufficiently performing the role of reducing the adhesiveness of the polymer.

The concentration of the water-soluble ethylenically unsaturated monomer in the monomer composition can be appropriately adjusted in consideration of polymerization time and reaction conditions, and may be about 20 to about 60 wt.%, or about 20 to about 40 wt.%.

The term 'internal crosslinking agent' as used herein is a term used to distinguish from a surface crosslinking agent that crosslinks the surface of the super absorbent polymer particles, which will be described later, and serves to introduce a crosslinking bond between the unsaturated bonds of the above-mentioned water-soluble ethylenically unsaturated monomers to form a polymer containing a crosslinked structure.

The crosslinking in the above step proceeds irrespective of the surface or the interior, but when the surface crosslinking step of the super absorbent polymer particles described later proceeds, the surface of the finally prepared super absorbent polymer particles may include a structure newly crosslinked by a surface crosslinking agent, and the interior of the super absorbent polymer particles can allow a structure crosslinked by the internal crosslinking agent to maintain without modification.

The internal crosslinking agent includes i) a polyfunctional acrylate-based compound, and ii) any one or more of a polyfunctional allyl-based compound and a polyfunctional vinyl-based compound.

Non-limiting examples of the polyfunctional acrylate-based compound include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, tripropylene glycol di(meth)acrylate, polypropylene glycol di(meth)acrylate, butanediol di(meth)acrylate, butylene glycol di(meth)acrylate, hexanediol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, trimethylolpropane di(meth)acrylate, trimethylolpropane tri(meth)acrylate, glycerin di(meth)acrylate, glycerin tri(meth)acrylate, and the like. In the present disclosure, these may be used alone or in combination of two or more.

In the polyfunctional acrylate-based compound, two or more acrylate groups contained in the molecule may combine with the unsaturated bonds of water-soluble ethylenically unsaturated monomers or the unsaturated bonds of other internal crosslinking agents, respectively, to form a crosslinked structure during polymerization process.

However, since these polyfunctional acrylate-based compounds contain an ester bond (-(C=O)O-) in the molecule, hydrolysis occurs in the neutralization process after the polymerization reaction described above, which may cause a problem that the crosslinks are broken and the crosslinked structure of the polymer is destroyed.

Therefore, in one embodiment of the present disclosure, any one or more of a polyfunctional allyl-based compound and a polyfunctional vinyl-based compound is used as an internal crosslinking agent separate from the above-mentioned polyfunctional acrylate-based compound.

Non-limiting examples of the polyfunctional allyl-based compound include ethylene glycol diallyl ether, diethylene glycol diallyl ether, triethylene glycol diallyl ether, tetraethylene glycol diallyl ether, polyethylene glycol diallyl ether, propylene glycol diallyl ether, tripropylene glycol diallyl ether, polypropylene glycol diallyl ether, butanediol diallyl ether, butylene glycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, glycerin triallyl ether, and the like. In the present disclosure, these may be used alone or in combination of two or more.

Non-limiting examples of the polyfunctional vinyl-based compound include ethylene glycol divinyl ether, diethylene glycol divinyl ether, triethylene glycol divinyl ether, tetraethylene glycol divinyl ether, polyethylene glycol divinyl ether, propylene glycol divinyl ether, tripropylene glycol divinyl ether, polypropylene glycol divinyl ether, butanediol divinyl ether, butylene glycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentavinyl ether, trimethylolpropane divinyl ether, trimethylolpropane trivinyl ether, glycerin divinyl ether, glycerin trivinyl ether, and the like. In the present disclosure, these may be used alone or in combination of two or more.

In the above-mentioned polyfunctional allyl-based compound or polyfunctional vinyl-based compound, two or more unsaturated groups contained in the molecule can combine with an unsaturated bond of the water-soluble ethylenically unsaturated monomer or an unsaturated bond of the other internal crosslinking agent to form a crosslinked structure during polymerization process, and unlike acrylate-based compounds containing an ester bond (-(C=O)O-) in the molecule, crosslinking can be stably maintained even during the neutralization process after the above-mentioned polymerization reaction.

Thereby, the gel strength of the prepared super absorbent polymer is increased, and the process stability can be enhanced during the discharge process after polymerization.

According to another embodiment of the present disclosure, the internal crosslinking agent may be used in an amount of about 0.01 to about 10 parts by weight, or about 0.01 parts by weight or more, or about 0.05 parts by weight or more, or about 0.15 parts by weight or more, or about 0.2 parts by weight or more, or about 0.3 parts by weight or more, or about 10 parts by weight or less, or about 5 parts by weight or less, or about 3 parts by weight or less, or about 1 part by weight or less, or about 0.7 parts by weight or less, or about 0.6 parts by weight or less, with respect to 100 parts by weight of the water-soluble ethylenically unsaturated monomer.

According to yet another embodiment of the present disclosure, the polyfunctional acrylate-based compound may be used in an amount of about 10 to about 200 parts by weight, or about 10 parts by weight or more, or about 20 parts by weight or more, or about 30 parts by weight or more, or about 40 parts by weight or more, or about 200 parts by weight or less, or about 190 parts by weight or less, or about 180 parts by weight or less, or about 170 parts by weight or less, or about 160 parts by weight or less, or about 150 parts by weight or less, with respect to 100 parts by weight of the total weight of any one or more compounds of the polyfunctional allyl-based compound and the polyfunctional vinyl-based compound.

When the polyfunctional acrylate-based compound and the polyfunctional allyl-based compound or the polyfunctional vinyl-based compound are used as the internal crosslinking agent in the same weight parts as above, the effect due to the above-mentioned mixed use can be further enhanced, particularly, in the neutralization process after polymerization, only a part of the crosslinks formed by the polyfunctional acrylate-based compound is decomposed, so that high absorption performance can be obtained as compared to the total amount of crosslinking agent added, and the content of water-soluble components can be minimized.

The crosslinking polymerization of the water-soluble ethylenically unsaturated monomer can be performed in the presence of such an internal crosslinking agent, a polymerization initiator, and, if necessary, a thickener, a plasticizer, a storage stabilizer, an antioxidant, and the like.

In the monomer composition, the internal crosslinking agent may be used in an amount of 0.01 to 5 parts by weight with respect to 100 parts by weight of the water-soluble ethylenically unsaturated monomer. For example, the internal crosslinking agent may be used in an amount of 0.01 parts by weight or more, or 0.05 parts by weight or more, or 0.1 parts by weight or more, and 5 parts by weight or less, or 3 parts by weight or less, or 2 parts by weight or less, or 1 part by weight or less, or 0.7 parts by weight or less, with respect to 100 parts by weight of the water-soluble ethylenically unsaturated monomer. When the content of the internal crosslinking agent is too low, crosslinking does not occur sufficiently, which may make it difficult to achieve strength above an appropriate level, and when the content of

the internal crosslinking agent is too high, the internal crosslinking density is increased, which may make it difficult to realize a desired centrifuge retention capacity.

The polymer formed using such an internal crosslinking agent has a three-dimensional network structure in which main chains formed by polymerizing the water-soluble ethylenically unsaturated monomers are crosslinked by the internal crosslinking agent. When the polymer has a three-dimensional network structure in this way, the centrifuge retention capacity and the absorbency under pressure, which are general physical properties of the super absorbent polymer, can be remarkably improved as compared to the case of a two-dimensional linear structure that is not further crosslinked by an internal crosslinking agent.

According to one embodiment of the present disclosure, the step of polymerizing the monomer composition to form a polymer may be performed in a plurality of batch type reactors.

In a conventional method for preparing a super absorbent polymer, the polymerization method is largely classified into the thermal polymerization and the photo-polymerization depending on the polymerization energy source. Usually, the thermal polymerization can be performed in a reactor like a kneader equipped with agitating spindles and the photo-polymerization can be performed in a reactor equipped with a movable conveyor belt or in a container with a flat bottom.

Meanwhile, as the polymerization method as described above generally proceeds in a short polymerization reaction time of about 1 hour or less, the molecular weight of the polymer is not large, and a polymer having a wide molecular weight distribution is formed.

Meanwhile, when the photo-polymerization is performed in a reactor equipped with a movable conveyor belt or in a container with a flat bottom, the morphology of the hydrogel polymer typically obtained may be a sheet-like hydrogel polymer having a width of the belt, and the thickness of the polymer sheet may vary depending on the concentration of the monomer composition supplied thereto and the supply speed or the supply amount, but it is usually obtained to have a thickness of about 0.5 to about 5 cm.

However, if the monomer composition is supplied to the extent that the thickness of the sheet-like polymer becomes too thin, the production efficiency becomes low, which is not preferred. If the thickness of the sheet-like polymer is made too thick for production, the polymerization reaction may not uniformly occur over the entire thickness, which makes it difficult to form high-quality polymer.

In addition, in the polymerization in a reactor having a reactor agitation shaft and equipped with a conveyor belt, a new monomer composition is supplied to the reactor while the polymerization result is moving, and polymerization is performed in a continuous mode, so that polymers having different polymerization rates are mixed, whereby polymerization is hard to uniformly occur in the entire monomer composition, and deterioration of overall physical properties may occur.

However, according to one embodiment of the present disclosure, as polymerization proceeds by a fixed-bed type in a batch reactor, polymers having different polymerization rates are less likely to be mixed, and thus a polymer having uniform quality can be obtained.

Further, the polymerization step is performed in a batch reactor having a predetermined volume, and the polymerization reaction is performed for a longer period of time, for example, 6 hours or more, than when polymerization is continuously performed in a reactor equipped with a conveyor belt. Despite the long polymerization reaction time as described above, since polymerization is performed for the water-soluble ethylenically unsaturated monomer in a non-neutralized state, the monomer is not easily precipitated even if the polymerization is performed for a long period of time, which is advantageous for performing a polymerization for a long period of time.

Meanwhile, according to one embodiment of the present disclosure, a plurality of batch type reactors can be provided and connected in parallel to increase productivity. At this time, the entire amount of the monomer composition may be supplied to each of the batch type reactors at once, or the monomer composition may be supplied in a divided mode.

For example, when the monomer composition may be charged in a divided mode into two batch reactors, only about 1/2 of the total reactor capacity of the monomer composition is charged into a first reactor (first charging) to progress the polymerization, and then, the monomer composition may be charged into a second reactor by only about 1/2 of the total capacity of the reactor (second charging) to progress the polymerization.

While the monomer composition is charged into the second reactor, the polymerization progresses to some extent in the first reactor, whereby after completing the charging of the monomer composition into the second reactor, the remaining monomer composition is charged into the first reactor (third charging). In addition, while the remaining monomer composition is charged into the first reactor, the polymerization progresses to some extent in the second reactor, whereby the remaining monomer composition is charged into the second reactor (fourth charging). At the same time, first, it is checked that the polymerization of the monomer composition primarily charged into the first reactor is completed, and the polymerization product is discharged from the first reactor.

If the above contents are generalized, they can be explained as follows.

First, the step of forming the polymer is performed in a plurality of batch type reactors.

Here, if each of the plurality of batch type reactors is the 1st to n-th reactor, the step of forming the polymer may be performed in a total of n batch type reactors from the 1st reactor to the n-th reactor.

And, if each reactor is a k-th reactor, the step of forming the polymer is performed in a plurality of batch type reactors from the 1st to n-th (n is an integer of 2 to 10), and it can be explained as including a k-th charging step of charging the monomer composition into the k-th reactor, a k-th polymerization step of continuously performing a polymerization reaction in the k-th reactor following the charging, and a k-th discharging step of continuously discharging the result of the polymerization reaction from the k-th reactor following the polymerization. Here, the k-th corresponds to the 1st to n-th.

According to an embodiment of the present disclosure, the polymerization reaction as described above may satisfy any one or more of the following three conditions.

First condition: The k+1-th charging step in the k+1-th reactor can proceed continuously following the k-th charging step in the k-th reactor.

Second condition: The k+1-th polymerization step in the k+1-th reactor can proceed continuously following the k-th polymerization step in the k-th reactor.

Third condition: The k+1-th discharging step in the k+1-th reactor can proceed continuously following the k-th discharging step in the k-th reactor.

When the polymerization proceeds by divisionally charging the monomer composition into a plurality of batch type reactors, respectively. continuous polymerization and discharging are possible, and thus the productivity can be remarkably improved.

Figs. 1 and 2 are diagrams which schematically show a process according to an embodiment of the present disclosure.

Referring to Fig. 1, it can be seen that each of the plurality of batch type reactors is defined as the A-th to E-th reactors, and the step of forming the polymer is performed in a total of six batch type reactors from the A-th reactor to the E-th reactor.

Also, referring to Fig. 1, it can be confirmed that when each of the plurality of batch type reactors is defined as the A-th to E-th reactors, any one or more of the following three conditions is satisfied.

First condition: The k+1-th charging step in the k+1-th reactor can proceed continuously following the k-th charging step in the k-th reactor.

Second condition: The k+1-th polymerization step in the k+1-th reactor can proceed continuously following the k-th polymerization step in the k-th reactor.

Third condition: The k+1-th discharging step in the k+1-th reactor can proceed continuously following the k-th discharging step in the k-th reactor.

Meanwhile, referring to Fig. 2, after the reaction and discharge in the A reactor are completed, the charging into the A reactor proceeds again, so that the entire reaction can proceed in a continuous or circulatory manner.

Specifically, after the k-th discharge step in the k-th reactor, continuously or discontinuously, the k-th charging step of charging the monomer composition again to the k-th reactor proceeds, and the entire reaction proceeds continuously along each reactor, and the individual processes can also circulate in each individual reactor and proceed in a circulatory manner.

Such a continuous and circulatory process can ensure process stability, thereby dramatically increasing the production of the super absorbent resin.

Meanwhile, as the polymerization in the batch reactor of the present disclosure utilizes a thermal polymerization method, a thermal polymerization initiator is used as the polymerization initiator.

As the thermal polymerization initiator, one or more compounds selected from the group consisting of a persulfate-based initiator, an azo-based initiator, hydrogen peroxide, and ascorbic acid may be used. Specific examples of the persulfate-based initiator may include sodium persulfate (NazSzOs), potassium persulfate ($K_2S_2O_8$), ammonium persulfate ($NH_4)_2S_2O_8$), and the like. Further, examples of the azo-based initiator may include 2,2-azobis-(2-amidinopropane)dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane]dihydrochloride, 4,4-azobis-(4-cyanovaleric acid) and the like. More various thermal polymerization initiators are well disclosed in "Principle of Polymerization" written by Odian, (Wiley, 1981), p203, which may be incorporated herein by reference.

Such polymerization initiator may be used in an amount of 2 parts by weight or less with respect to 100 parts by weight of the water-soluble ethylenically unsaturated monomer. That is, if the concentration of the polymerization initiator is too low, the polymerization speed may be slowed down and thus a large amount of residual monomers may be extracted from the final product, which is not preferable. On the contrary, if the concentration of the polymerization initiator is higher than the above range, a polymer chain forming a network may become short, and thus, the physical properties of polymer may be degraded such as increase in the content of water-soluble components and decrease in absorbency under pressure, which is not preferable.

Meanwhile, in one embodiment of the present disclosure, the polymerization may be initiated by adding the

initiator and a reducing agent forming a redox couple together.

Specifically, when the initiator and the reducing agent are charged into the polymer solution, they react with each other to form radicals.

The formed radicals react with the monomers, and the oxidation-reduction reaction between the initiator and the reducing agent is highly reactive. Thus, even if only a small amount of an initiator and a reducing agent are added, polymerization is initiated and the process temperature does not need to be increased, so that low-temperature polymerization is possible and changes in physical properties of the polymer solution can be minimized.

The polymerization reaction using the oxidation-reduction reaction may occur smoothly even at a temperature near or below room temperature (25°C). As an example, the polymerization reaction can be performed at a temperature of 5°C or more and 25°C or less, or 5°C or more and 20°C or less.

In one embodiment of the present disclosure, when a persulfate-based initiator is used as the initiator, the reducing agent may include at least one selected from the group consisting of sodium metabisulfite (NazSzOs); tetramethyl ethylenediamine (TMEDA); a mixture of iron(II) sulfate and EDTA ($FeSO_4$/EDTA); sodium formaldehyde sulfoxylate; and disodium 2-hydroxy-2- sulfinoacteate.

In one example, potassium persulfate may be used as an initiator, and disodium 2-hydroxy-2-sulfinoacetate may be used as a reducing agent; or ammonium persulfate may be used as an initiator and tetramethylethylenediamine may be used as a reducing agent; or sodium persulfate may be used as an initiator, and sodium formaldehyde sulfoxylate may be used as a reducing agent.

In another embodiment of the present disclosure, when a hydrogen peroxide-based initiator is used as the initiator, the reducing agent may include at least one selected from the group consisting of ascorbic acid; sucrose; sodium sulfite ($Na_2SO_3$); sodium metabisulfite (NazSzOs); tetramethyl ethylenediamine (TMEDA); a mixture of iron(II) sulfate and EDTA ($FeSO_4$/EDTA); sodium formaldehyde sulfoxylate; disodium 2-hydroxy-2-sulfinoacteate; and disodium 2-hydroxy-2-sulfoacteate.

The monomer composition may further contain additives such as a thickener, a plasticizer, a storage stabilizer, and an antioxidant, if necessary.

And, the monomer composition containing the monomer may be, for example, in a solution state dissolved in a solvent such as water, and the solid content in the monomer composition in a solution state, that is, the concentration of the monomer, the internal crosslinking agent and the polymerization initiator may be appropriately adjusted in consideration of the polymerization time, reaction conditions and the like. For example, the solids content in the monomer composition may be 10 to 80% by weight, or 15 to 60 wt.%, or 30 to 50 wt.%.

The solvent that can be used at this time can be used without limitations in the constitution as long as it is able to dissolve the above-mentioned components, and for examples, one or more in combination selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate and N,N-dimethylacetamide can be used.

As the polymer obtained by such a method is polymerized using the ethylenically unsaturated monomer in a non-neutralized state, a polymer having a high molecular weight and a uniform molecular weight distribution as described above can be formed, and the content of water-soluble components can be reduced.

The polymer obtained by such a method is in the form of a hydrogel polymer, and may have a moisture content of 30 to 80 wt.%. For example, the water content of the polymer may be 30 wt.% or more, or 45 wt.% or more, or 50 wt.% or more, and 80 wt.% or less, or 70 wt.% or less, or 60 wt.% or less.

When the moisture content of the polymer is too low, it is difficult to secure an appropriate surface area in the subsequent pulverization step and thus it may not be possible to pulverize effectively. When the moisture content of the polymer is too high, the pressure received in the subsequent pulverization step increases and thus it may be difficult to pulverize to a desired particle size.

Meanwhile, the "moisture content" as used herein is the content occupied by moisture based on the total weight of a polymer, and it means as a value obtained by subtracting the weight of polymer of a dry state from the weight of the polymer. Specifically, it is defined as a value calculated by measuring the weight loss according to moisture evaporation in the polymer while raising the temperature of polymer of a crumb state through infrared heating to dry. At this time, the drying condition is set up such that the temperature is raised from room temperature to about 180°C and then maintained at 180°C, and the total drying time is 40 minutes including a temperature raising step of 5 minutes.

## Step 2: Neutralization Step and Step 3: Micronizing Step

Next, the step neutralizing at least a part of the acidic group of the polymer to form a hydrogel polymer (step 2) is performed.

At this time, as the neutralizing agent, a basic material such as sodium hydroxide, potassium hydroxide, ammonium hydroxide and the like that can neutralize an acidic group can be used.

Further, the degree of neutralization, which refers to the degree of being neutralized by a neutralizing agent among the acidic groups contained in the polymer, may be 50 to 90 mol%, or 60 to 85 mol%, or 65 to 85 mol%, or 65 to 75 mol%. The range of the degree of neutralization may vary depending on the final physical properties. If the degree of neutralization is too high, the absorption capacity of the super absorbent polymer is lowered and the concentration of carboxyl groups on the surface of the particles is too low, making it difficult to perform surface crosslinking in a subsequent process, which may reduce absorbency under pressure or liquid permeability. On the contrary, if the degree of neutralization is too low, not only the absorbency of the polymer is greatly reduced, but it can also exhibit properties similar to elastic rubber, which is difficult to handle.

Simultaneously with the second step, or before or after performing the second step, a step of micronizing the polymer in the presence of a surfactant is performed (step 3).

The above step is a step of micronizing the polymer in the presence of a surfactant, which is a step in which the polymer is simultaneously chopped and aggregated to a size of several tens to several hundreds of micrometers, rather than chopping the polymer to a millimeter size. That is, this is a step of preparing secondary aggregated particles in a shape in which primary particles chopped to a size of tens to hundreds of micrometers are aggregated by imparting appropriate adhesiveness to the polymer. The water-containing super absorbent polymer particles, which are secondary aggregated particles prepared through such a step, have a normal particle size distribution and significantly increased the surface area, thereby remarkably improving the vortex time.

After mixing the polymer and the surfactant in this way, the polymer is micronized in the presence of the surfactant. Thereby, hydrous super absorbent polymer particles, which are the form of secondary aggregated particles chopped and aggregated in a state where the super absorbent polymer particles and the surfactant are mixed, can be produced.

Here, the term "hydrous super absorbent polymer particles" are particles having a moisture content (water content) of about 30 wt.% or more, which are those in which the polymer is chopped and aggregated in the form of particles without a drying process, and thus it may have a moisture content of 30 to 80 wt.%, similarly to the above polymer.

According to one embodiment of the present disclosure, the surfactant may be a compound represented by the following Chemical Formula 2 or a salt thereof, but the present disclosure is not limited thereto:

[Chemical Formula 2]

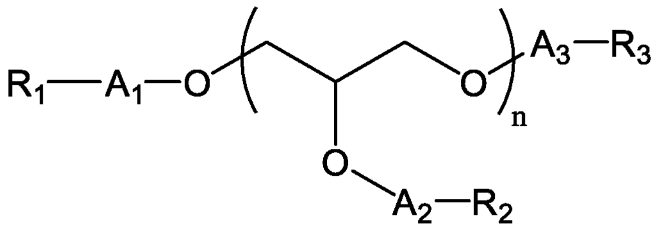

wherein, in Chemical Formula 2,

$A_1$, $A_2$ and $A_3$ are each independently a single bond, carbonyl,

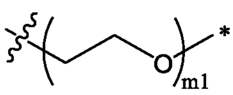, 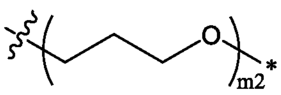 or 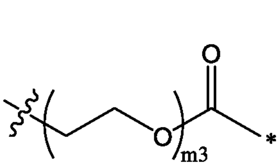,

provided that one or more thereof are carbonyl or

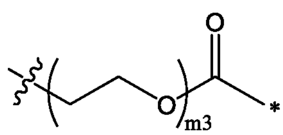,

where m1, m2 and m3 are each independently an integer of 1 to 8, each

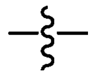

is connected to an adjacent oxygen atom, and

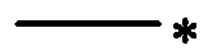

is connected to adjacent $R_1$, $R_2$ an $R_3$, respectively,

$R_1$, $R_2$ and $R_3$ are each independently hydrogen, a linear or branched alkyl having 6 to 18 carbon atoms, or a linear or branched alkenyl having 6 to 18 carbon atoms, and

n is an integer of 1 to 9.

The surfactant is mixed with the polymer and added so that the micronizing step can be easily performed without aggregation phenomenon.

The surfactant represented by Chemical Formula 2 is a nonionic surfactant and has excellent surface adsorption performance due to hydrogen bonding even with non-neutralized polymers, which is thus suitable for achieving a desired aggregation control effect. Meanwhile, in the case of an anionic surfactant instead of a nonionic surfactant, when mixed with a polymer neutralized with a neutralizing agent such as NaOH, $Na_2SO_4$, it is adsorbed via $Na^+$ ions ionized in the carboxyl group substituents of the polymer, and when mixed into a non-neutralized polymer, there is a problem that the efficiency of adsorption to the polymer is relatively low due to competition with the anions of the carboxyl group substituents of the polymer.

Specifically, in the surfactant represented by Chemical Formula 2, the hydrophobic functional group is $R_1$, $R_2$ and $R_3$ moieties which are terminal functional groups (if not hydrogen), and the hydrophilic functional group further includes glycerol-derived moieties within the chain and terminal hydroxyl groups (n=1 to 3 when $A_n$ is a single bond and at the same time, $R_n$ is hydrogen), wherein the glycerol-derived moiety and the terminal hydroxyl group serve to improve adsorption performance on the polymer surface as a hydrophilic functional group. Thereby, aggregation of the super absorbent polymer particles can be effectively suppressed.

In Chemical Formula 2, $R_1$, $R_2$ and $R_3$ moieties which are hydrophobic functional groups (if not hydrogen) are each independently a linear or branched alkyl having 6 to 18 carbon atoms or a linear or branched alkenyl having 6 to 18 carbon atoms. In this case, when $R_1$, $R_2$, and $R_3$ moieties (if not hydrogen) are an alkyl or alkenyl having less than 6 carbon atoms, there is a problem that the chain length is short and the aggregation control of the pulverized particles cannot be performed effectively. When $R_1$, $R_2$, $R_3$ moieties (if not hydrogen) are alkyl or alkenyl having more than 18 carbon atoms, there may be a problem that the mobility of the surfactant may be reduced and thus, it may not be effectively mixed with the polymer and the unit price of the composition increases due to the increase in the cost of the surfactant.

Preferably, $R_1$, $R_2$ and $R_3$ are hydrogen, or in the case of a linear or branched alkyl having 6 to 18 carbon atoms, it may be 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or in the case of a linear or branched alkenyl having 6 to 18 carbon atoms, it may be 2-hexenyl, 2-heptenyl, 2-octenyl, 2-nonenyl, n-dekenyl, 2-undekenyl, 2-dodekenyl, 2-tridekenyl, 2-tetradekenyl, 2-pentadekenyl, 2-hexadekenyl, 2-heptadekenyl, or 2-octadekenyl.

The surfactant may be selected from compounds represented by the following Chemical Formulas 2-1 to 2-14:

[Chemical Formula 2-1]

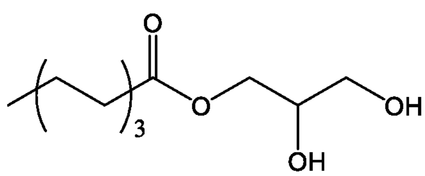

[Chemical Formula 2-2]

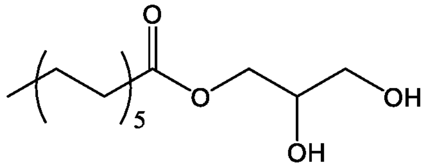

[Chemical Formula 2-3]

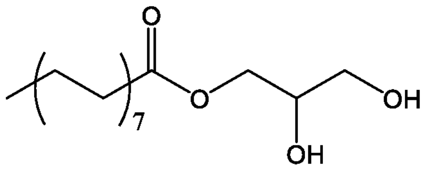

[Chemical Formula 2-4]

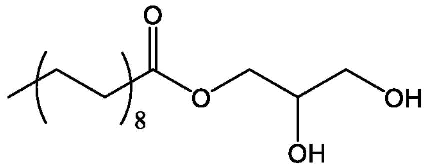

[Chemical Formula 2-5]

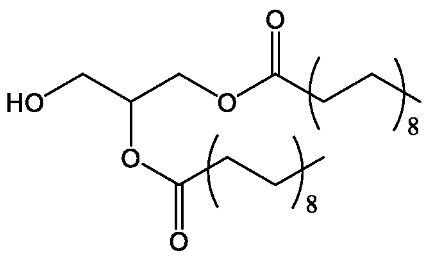

[Chemical Formula 2-6]

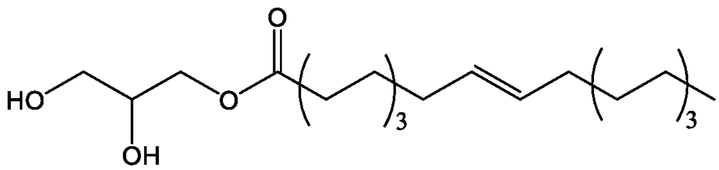

[Chemical Formula 2-7]

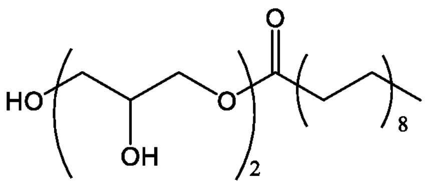

[Chemical Formula 2-8]

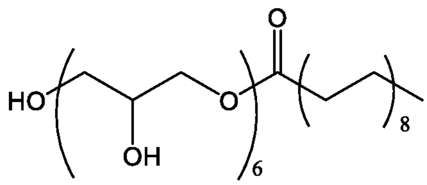

[Chemical Formula 2-9]

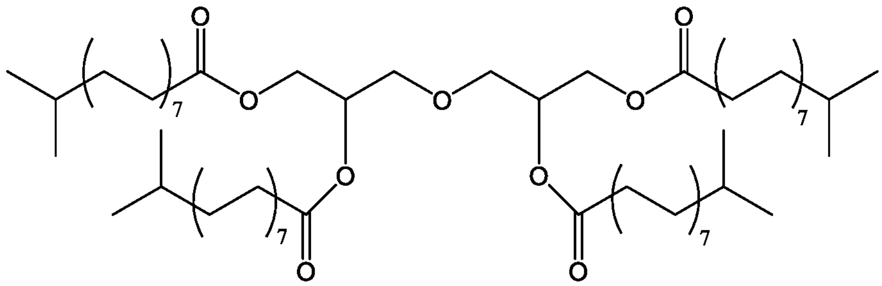

[Chemical Formula 2-10]

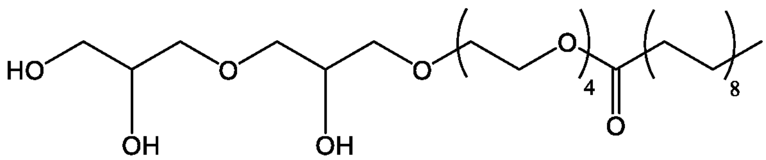

[Chemical Formula 2-11]

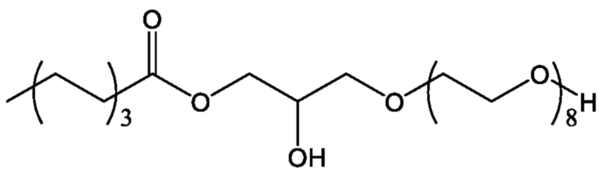

[Chemical Formula 2-12]

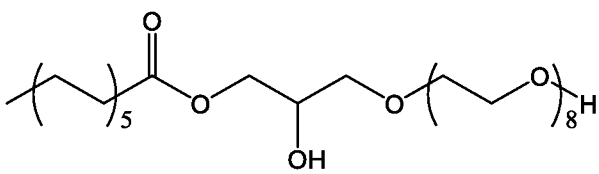

[Chemical Formula 2-13]

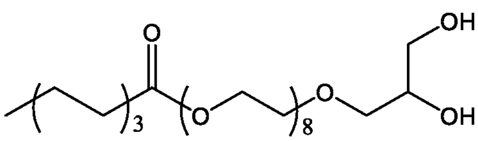

[Chemical Formula 2-14]

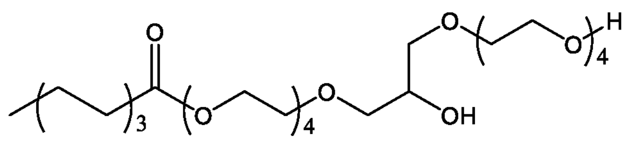

.

Meanwhile, the surfactant may be used in an amount of 0.01 to 10 parts by weight with respect to 100 parts by weight of the polymer. When the surfactant is used in an excessively small amount, it is not evenly adsorbed on the surface of the polymer and thus, reaggregation of the particles after pulverization may occur. When the surfactant is used in an excessively large amount, the overall physical properties of the finally prepared super absorbent polymer may be deteriorated. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight with respect to 100 parts by weight of the polymer.

The method for mixing such a surfactant with the polymer is not particularly limited as long as it can be uniformly mixed with the polymer, and can be appropriately adopted and used. Specifically, the surfactant may be mixed in a dry manner, or dissolved in a solvent and then mixed in a solution state, or the surfactant may be melted and then mixed.

Among them, for example, the surfactant may be mixed in a solution state in which it is dissolved in a solvent. At this time, as the solvent, any kind of inorganic solvent or organic solvent can be used without limitation. Considering the ease of the drying process and the cost of the solvent recovery system, water is most suitable.

In addition, a method of putting the surfactant and the polymer in a reaction tank and mixing the solution, or a method of putting the polymer in a mixer and spraying the solution, a method of continuously charging and mixing a polymer and a solution into a continuously operated mixer, and the like can be used.

Meanwhile, according to an embodiment of the present disclosure, a step of neutralizing at least a part of the acidic group of the polymer to form a hydrogel polymer (step 2), and a step of micronizing the polymer in the presence of a surfactant (step 3) can be performed sequentially, alternately, or simultaneously.

That is, a neutralizing agent is added to the polymer to neutralize the acidic group first, and then a surfactant may be added to the neutralized polymer to micronize the polymer mixed with the surfactant (performed in the order of step 2 -> step 3), a neutralizing agent and a surfactant may be simultaneously added to the polymer to neutralize and micronize the polymer (steps 2 and 3 are performed simultaneously). Alternatively, the surfactant may be added first and the neutralizing agent may be added later (performed in the order of step 3->step 2). Alternatively, the neutralizing agent and the surfactant may be alternately added. Alternatively, a surfactant is first added and micronized, then a neutralizing agent is added and neutralized, and further a surfactant is further added to the neutralized hydrogel polymer to perform the micronizing step

Meanwhile, it may be desirable to provide a certain time difference between the charging of the neutralizing agent and the micronizing process in order to evenly neutralize the entire polymer.

At least a part to a significant amount of the surfactant may be present on the surface of the hydrogel polymer.

Here, the surfactant being present on the surface of the hydrogel polymer means that at least a part or a significant amount of the surfactant is adsorbed or bonded onto the surface of the hydrogel polymer. Specifically, the surfactant may be physically or chemically adsorbed on the surface of the super absorbent polymer. More specifically, the hydrophilic functional group of the surfactant may be physically adsorbed to the hydrophilic part of the surface of the super absorbent polymer by intermolecular force such as dipole-dipole interaction. In this manner, the hydrophilic portion of the surfactant is physically adsorbed on the surface of the super absorbent polymer particles to surround the surface, and the hydrophobic portion of the surfactant is not adsorbed to the surface of the resin particles, so that the resin particles can be coated with a surfactant in the form of a kind of micelle structure. This is because the surfactant is not added during the polymerization process of the water-soluble ethylenically unsaturated monomer, but added in the micronizing process after polymer formation. It can faithfully perform its role as a surfactant as compared to the case where the surfactant is added during the polymerization process and the surfactant is present inside the polymer, and pulverization and aggregation occur at the same time to obtain particles with a large surface area in the form in which fine particles are aggregated.

According to an embodiment of the present disclosure, the step of micronizing the polymer may be performed two or more times.

According to an embodiment of the present disclosure, the micronizing step is performed by a micronizing device, wherein the and micronizing device may include a body portion including a transfer space in which the polymer is transferred inside; a screw member rotatably installed inside the transfer space to move the polymer; a driving motor that provides a rotational driving force to the screw member; a cutter member installed in the body portion to pulverize

the polymer; and a perforated plate in which the polymer pulverized by the cutter member is discharged to the outside of the body, and a large number of holes are formed in the plate. At this time, the hole size provided in the perforated plate of the micronizing device may be 1 mm to 20 mm, or 5 mm to 15 mm, or 5 mm to 12 mm.

In this manner, when the polymer mixed with the surfactant is micronized while controlling aggregation using a micronizing device, a smaller particle size distribution is realized and subsequent drying and pulverization processes can be performed under milder conditions, thereby capable of improving the physical properties of the super absorbent polymer while preventing the generation of fines.

## Step 4: Drying Step

Next, a step of drying the neutralized and micronized polymer to produce dry super absorbent polymer particles (step 4) is performed.

The above step is a step of neutralizing at least a part of the acidic group of the polymer, micronizing the polymer in the presence of a surfactant, and drying the moisture of the hydrous super absorbent polymer particles, which is the resulting polymer.

In a conventional method for preparing a super absorbent polymer, the drying step is generally performed until the moisture content of the super absorbent polymer becomes less than 10 wt.%, but according to one embodiment of the present disclosure, the drying step is performed so that the moisture content of the super absorbent polymer becomes 10 wt.% or more, for example, about 10 to about 20 wt.%, or about 10 to about 15 wt.%.

For this purpose, the temperature in the dryer used in the drying step is about 150°C or less, for example, about 80°C to about 150°C, and drying can be performed at a relatively low temperature. When the temperature inside the dryer is too low, the drying time may be too long, and when the drying temperature is too high, a super absorbent polymer having a moisture content lower than a desired moisture content can be obtained.

At this time, the drying may be performed by a moving type. Such moving type drying is divided into a stationary drying and the presence/absence of flow of material during drying.

The moving type drying refers to a method of drying the product while mechanically stirring it. At this time, the direction in which the hot air passes through the material may be the same as or different from the circulation direction of the material. Alternatively, the material can be circulated inside the dryer, and the heat-transfer fluid (heat-transfer oil) may be passed through a separate pipe outside the dryer to dry the material.

Meanwhile, the stationary drying refers to a method in which a material to be dried is stopped at the bottom, such as a perforated iron plate through which air can pass, and hot air passes through the material from the bottom to the top to dry it.

Therefore, it is preferable to dry the hydrous super absorbent polymer by a moving type drying method in terms of being able to complete uniform drying within a short time that is to be dried in the above step.

As a device capable of drying by such a moving type drying method, a horizontal-type mixer, a rotary kiln, a paddle dryer, a steam tube dryer, or a generally used moving type dryer can be used.

## Step 5: Pulverizing Step

Next, a step of pulverizing the dried super absorbent polymer particles to produce super absorbent polymer particles is performed.

Specifically, the pulverizing step can be performed to pulverize the dried super absorbent polymer particles to have a particle size of a normal particle level, that is, a particle size of 150 μm to 850 μm.

The pulverizing device used for this purpose may be specifically a vertical pulverizer, a turbo cutter, a turbo grinder, a rotary cutter mill, a cutter mill, a disc mill, a shred crusher, a crusher, a chopper or disc cutter, or the like, but is not limited the examples described above.

Alternatively, as the mill, a pin mill, a hammer mill, a screw mill, a roll mill, a disc mill, or a jog mill can be used, but is not limited to the examples described above.

Meanwhile, in the preparation method of the present disclosure, the super absorbent polymer particles having a smaller particle size distribution than in the conventional chopping step can be realized in the micronizing step. When performing moving type drying, since the moisture content after drying is maintained relatively high at 10 wt.% or more, it is possible to form a super absorbent polymer having a very high content of a normal particle size of 150 μm to 850 μm even if the pulverization is performed under mild conditions with less pulverization force, and fines generation rate can be greatly reduced.

The super absorbent polymer particles produced as described above may contain super absorbent polymer particles having a particle size of 150 μm to 850 μm, that is, normal particles, in an amount of 80 wt.% or more, 85 wt.% or more, 89 wt.% or more, 90 wt.% or more, 92 wt.% or more, 93 wt.% or more, 94 wt.% or more, or 95 wt.% or more with respect to the total weight.

The particle size of the polymer particles may be measured according to the European Disposables and Nonwovens Association standard EDANA WSP 220.3.

Further, the super absorbent polymer particles may contain fines having a particle size of less than 150 μm in an amount of about 20 wt.% or less, or about 18 wt.% or less, or about 15 wt.% or less, or about 13 wt.% or less, or about 12 wt.% or less, or about 11 wt.% or less, or about 10 wt.% or less, or about 9 wt.% or less, or about 8 wt.% or less, or about 5 wt.% or less with respect to the total weight. This is in contrast to the case having fines of greater than about 20 wt.% to about 30 wt.% when the super absorbent polymer is prepared according to a conventional preparation method.

## Additional step

After the step of pulverizing the super absorbent polymer particles, the method may further include a step of classifying the pulverized super absorbent polymer particles in accordance with particle sizes.

Further, the method may further include a step of forming a surface crosslinked layer on at least a part of the surface of the super absorbent polymer particles in the presence of a surface crosslinking agent after pulverizing and/or classifying the super absorbent polymer particles. Through the above step, the crosslinked polymer contained in the super absorbent polymer particles may be further crosslinked via the surface crosslinking agent to form a surface crosslinked layer on at least a part of the surface of the super absorbent polymer particles.

As the surface crosslinking agent, any surface crosslinking agent conventionally used in the production of super absorbent polymers may be used without particular limitation. For example, the surface crosslinking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; at least one carbonate-based compound selected from the group consisting of ethylene carbonate, propylene carbonate and glycerol carbonate; an epoxy compound, such as ethylene glycol diglycidyl ether; an oxazoline compound such as oxazolidinone; a polyamine compound; an oxazoline compound; mono-, di- or polyoxazolidinone compounds; or a cyclic urea compound; and the like.

Specifically, one or more, or two or more, or three or more of the above-mentioned surface crosslinking agents can be used as the surface crosslinking agent. For example, ethylene carbonate-propylene carbonate (ECPC), propylene glycol and/or glycerol carbonate can be used.

Such a surface crosslinking agent can be used in an amount of about 0.001 to about 5 parts by weight with respect to 100 parts by weight of the superabsorbent polymer particles. For example, the surface crosslinking agent may be used in an amount of 0.005 parts by weight or more, or 0.01 parts by weight or more, or 0.05 parts by weight or more, or 5 parts by weight or less, or 4 parts by weight or less, or 3 parts by weight or less with respect to 100 parts by weight of the super absorbent polymer particles. By adjusting the content range of the surface crosslinking agent to the above-mentioned range, a super absorbent polymer having excellent absorption properties can be prepared.

Further, the step of forming the surface crosslinking layer can be performed by adding an inorganic material to the surface crosslinking agent. That is, the step of further crosslinking the surface of the super absorbent polymer particles in the presence of the surface crosslinking agent and the inorganic material to form a surface crosslinking layer can be performed.

As such an inorganic material, at least one inorganic material selected from the group consisting of silica, clay, alumina, silica-alumina composite, titania, zinc oxide, and aluminum sulfate can be used. The inorganic material can be used in powder form or liquid form, and particularly, it can be used as alumina powder, silica-alumina powder, titania powder, or nano silica solution. Further, the inorganic material can be used in an amount of about 0.001 to about 1 part by weight with respect to 100 parts by weight of the super absorbent polymer particles.

With regard to the method of mixing the surface crosslinking agent with the super absorbent polymer, its constitution is not limited. For example, a method of adding and mixing the surface crosslinking agent and the super absorbent polymer powder in a reactor, a method of spraying the surface crosslinking agent onto the super absorbent polymer composition, or a method of continuously charging the super absorbent polymer composition and the surface crosslinking agent into a mixer which is continuously operated, or the like, can be used.

When the surface crosslinking agent and the super absorbent polymer composition are mixed, water and methanol may be further mixed together and added. When water and methanol are added, there is an advantage that the surface crosslinking agent may be appropriately adjusted in order to induce uniform dispersion of the surface crosslinking agent, prevent aggregation of the super absorbent polymer composition, and at the same time, optimize the surface penetration depth of the crosslinking agent.

The surface crosslinking process can be performed at a temperature of about 80°C to about 250°C. More specifically, the surface crosslinking process can be performed at a temperature of about 100°C to about 220°C, or about 120°C to about 200°C for about 20 minutes to about 2 hours, or about 40 minutes to about 80 minutes. When the above-mentioned surface crosslinking process conditions are satisfied, the surface of the super absorbent polymer

particles may be sufficiently crosslinked to increase absorbency under pressure.

A means for raising the temperature for the surface crosslinking reaction is not particularly limited. Heating may be performed by providing a heating medium or by directly providing a heat source. The type of the heating medium applicable herein may be a hot fluid such as steam, hot air, hot oil, or the like, but is not limited thereto. Further, the temperature of the heating medium provided can be appropriately selected considering the means of the heating medium, the temperature-raising rate, and the temperature-raising target temperature. Meanwhile, as the heat source provided directly, an electric heater or a gas heater may be used, but is not limited to the above-described examples.

According to one embodiment of the present disclosure, after the forming of the surface crosslinked layer on at least a part of the surface of the super absorbent polymer particles, a cooling step of cooling the super absorbent polymer particles on which the surface crosslinked layer is formed, the method may further comprise any one or more steps of: a cooling step of cooling the super absorbent polymer particles on which the surface crosslinked layer is formed; a water addition step of adding water to the super absorbent polymer particles on which the surface crosslinked layer is formed; and a post-treatment step of adding an additive to the super absorbent polymer particles on which the surface crosslinked layer is formed. At this time, the cooling step, the water addition step, and the post-treatment step may be performed simultaneously.

The additive added in the post-treatment step may be a liquid permeability improver, an anti-caking agent, a fluidity improver, an antioxidant, and the like, but the present disclosure is not limited thereto.

By selectively performing the cooling step, the water addition step, and the post-treatment step, the moisture content of the final super absorbent polymer can be improved, and a higher quality super absorbent polymer product can be produced.

According to yet another embodiment of the present disclosure, there is provided a super absorbent polymer prepared by the above preparation method.

The super absorbent polymer prepared by the above preparation method has a fast vortex time and a low water soluble component content, and also has a centrifuge retention capacity (CRC) and absorbency under pressure (AUP), which are general absorption properties, in a level equal to or higher than those of a super absorbent polymer prepared by a conventional method.

Further, it is possible to provide a super absorbent resin that can have a uniform particle size distribution by narrowing the particle size distribution and is excellent in all of liquid permeability, rewet properties, vortex time, etc., by lowering the content of water-soluble components.

The super absorbent polymer according to one embodiment includes a polymer in which a water-soluble ethylenically unsaturated monomer having an acid group and the internal crosslinking agent are subjected to a crosslinking polymerization, with at least a part of the acidic group of the polymer being neutralized, and a surface crosslinked layer formed on the polymer by further crosslinking the polymer via a surface crosslinking agent, wherein a vortex time is less than 30 seconds, and a content of water-soluble components measured after swelling for 1 hour according to the EDANA WSP 270.3 is 5 wt.% or less.

In one example, the super absorbent polymer of the present disclosure may have a centrifuge retention capacity (CRC) as measured according to the EDANA WSP 241.3 in the range of about 30 g/g or more, or about 32 g/g or more, or about 34 g/g or more, or about 35 g/g or more, and about 50 g/g or less, or about 45 g/g or less, or about 40 g/g or less.

Further, the super absorbent polymer of the present disclosure may have an absorbency under pressure (AUP) under 0.3 psi measured according to the EDANA WSP 242.3 in the range of about 25 g/g or more, or about 27 g/g or more, or about 29 g/g or more, or about 30 g/g or more, or about 31 g/g or more, or about 32 g/g or more, and about 40 g/g or less, or about 35 g/g or less, or about 33 g/g or less.

Further, the super absorbent polymer of the present disclosure may have a vortex time of 30 seconds or less, or 28 seconds or less, or 27 seconds or less, or 26 seconds or less, or 25 seconds or less, or 24 seconds or less.

The vortex time is more excellent as its value is smaller, and the lower limit of the vortex time is 0 seconds in theory, but as an example, it may be about 5 seconds or more, or about 10 seconds or more, or about 12 seconds or more.

The vortex time means the time (unit: second) required for the liquid vortex to disappear due to quick absorption when the super absorbent resin is added to a physiological saline and stirred. It can be seen that as the time is shorter, the super absorbent polymer has a faster initial vortex time.

Further, the super absorbent polymer of the present disclosure may have a content of water-soluble components measured after swelling for 1 hour according to the EDANA WSP 270.3, of 5 wt.% or less, or 4 wt.% or less, or 3 wt.% or less, or 2.8 wt.% or less, or 2.6 wt.% or less.

The content of the water-soluble component is more excellent as its value is smaller. The lower limit is 0% by weight in theory, but as an example, it may be 0.1 wt.% or more, or 1 wt.% or more.

Thereby, the super absorbent polymer can be suitably used as a sanitary material such as a diaper, particularly, an ultra-thin sanitary material with a reduced pulp content.

Hereinafter, preferred examples are presented to aid in understanding of the invention. However, the following examples are for illustrative purposes only, and the scope of the invention is not intended to be limited thereby.

**Example 1**

**Preparation of hydrogel polymer**

In a 2L glass container equipped with a stirrer and thermometer, 100 g of acrylic acid, 0.20 g of pentaerythritol triallyl ether (PETTAE) as an internal crosslinking agent, 0.15 g of polyethylene glycol diacrylate (PEGDA), and 226 g of water were mixed with stirring. At this time, while maintaining the reaction temperature at 5°C, nitrogen was added to the mixture at 1000 cc/min for 1 hour. Then, 1.3 g of a 0.3% aqueous hydrogen peroxide solution, 1.5 g of a 1% aqueous ascorbic acid solution, and 3.0 g of a 2% aqueous 2,2'-azobis amidinopropane dihydrochloride solution were added as a polymerization initiator, and at the same time, 1.5 g of 0.01% aqueous iron sulfate solution was added as a reducing agent and mixed.

A polymerization reaction started in the mixture and the temperature of the polymer reached 85°C, and then polymerized in an oven at 90±2°C for about 6 hours to prepare a hydrogel polymer.

**Preparation of hydrous super absorbent polymer particles**

1000 g of the obtained hydrogel polymer was pulverized by passing it four times through a micronizing device equipped with a perforated plate having a large number of fine pores with a hole size of 6 mm. At this time, no additives were added when passing through first time, 400 g of 32% NaOH aqueous solution was added when passing through $2^{nd}$ time, 37.5 g of 15% $Na_2SO_4$ aqueous solution was added when passing through $3^{rd}$ time, and when passing through $4^{th}$ time, glycerol monolaurate (GML) as a surfactant was added in the form of an aqueous solution in water at a high temperature (about 60°C) so that its content was 0.4 parts by weight with respect to 100 parts by weight of the hydrogel polymer.

**Drying**

The hydrous super absorbent polymer particles obtained as a result of the pulverization were put into a rotary mixer, and then dried while stirring at150°C at a speed of 100 rpm for 60 minutes to obtain dry super absorbent polymer particles.

**Formation of surface crosslinked layer**

Next, with respect to 100 g of the dried super absorbent polymer particles, 4 g of water, 6 g of methanol, 0.1 g of ethylene glycol diglycidyl ether (EJ-1030S), 0.1 g of propylene glycol, and 0.2 g of aluminum sulfate were added to prepare a surface crosslinking solution, which was then mixed for 1 minute, and subjected to a surface crosslinking reaction at 140°C for 50 minutes to obtain a surface crosslinked super absorbent polymer.

**Example 2**

A surface crosslinked super absorbent polymer was obtained in the same manner as in Example 1, except that in the preparation of the hydrogel polymer, 0.20 g of pentaerythritol triallyl ether (PETTAE) and 0.30 g of polyethylene glycol diacrylate (PEGDA) were used as an internal crosslinking agent.

**Example 3**

A surface crosslinked super absorbent polymer was obtained in the same manner as in Example 1, except that in the preparation of the hydrogel polymer, 0.25 g of pentaerythritol triallyl ether (PETTAE) and 0.10 g of polyethylene glycol diacrylate (PEGDA) were used as an internal crosslinking agent.

**Comparative Example 1**

A surface crosslinked super absorbent polymer was obtained in the same manner as in Example 1, except that in the preparation of the hydrogel polymer, only 0.20 g of pentaerythritol triallyl ether (PETTAE) was used as an internal crosslinking agent.

**Comparative Example 1**

A surface crosslinked super absorbent polymer was obtained in the same manner as in Example 1, except that

in the preparation of the hydrogel polymer, only 0.35 g of pentaerythritol triallyl ether (PETTAE) was used as an internal crosslinking agent.

The absorption performance of the super absorbent polymers finally prepared in Examples and Comparative Examples was evaluated by the following method.

**(1) Centrifuge Retention Capacity (CRC)**

Centrifuge retention capacity(CRC) by absorption capacity under no load was measured for the super absorbent polymers prepared in Examples and Comparative Examples in accordance with the European Disposables and Nonwovens Association standard EDANA WSP 241.3.

In detail, after uniformly introducing W0 (g, about 0.2g) of the super absorbent polymers in a nonwoven fabric-made bag and sealing the bag, it was immersed in a physiological saline (0.9 wt.%) at room temperature. After 30 minutes, the bag was hydrated by using a centrifuge at 250G for 3 minutes, and then the weight W2(g) of the bag was measured. Further, after performing the same operation without using the polymer, the weight W1(g) of the bag was measured.

CRC (g/g) was calculated using the obtained weights according to the following Equation 2.

[Equation 2]

$$CRC\ (g/g) = \{[W2(g) - W1(g)]/W0(g)\} - 1$$

**(2) Absorbency under Pressure(AUP)**

Absorbency under 0.3 psi of the super absorbent polymers prepared in Examples and Comparative Examples was measured according to the EDANA WSP 242.3.

Specifically, a 400 mesh wire netting made of stainless was installed on the bottom of a plastic cylinder with an inner diameter of 25 mm. Under the conditions of room temperature and relative humidity of 50%, W0(g, 0.9 g) of super absorbent polymer were uniformly scattered on the wire netting, and a piston that can uniformly further give a load of 0.3 psi was put on the super absorbent polymer. Wherein, as the piston, a piston having an outer diameter slightly smaller than 25 mm was used such that there was no gap with the inner wall of the cylinder, and the movement upward and downward was not hindered. At this time, the weight W3(g) of the apparatus was measured.

Subsequently, on the inner side of a petri dish having a diameter of 150 mm, a glass filter having a diameter of 90 mm and a thickness of 5 mm was positioned, and a physiological saline made of 0.9 wt.% sodium chloride was poured on the petri dish. Wherein, the saline solution was poured until the water level of the saline solution became the same level to the upper side of the glass filter. And, one filter paper with a diameter of 90 mm was put thereon. On the filter paper, the above prepared apparatus was mounted, and the liquid was absorbed for 1 hour under load. After 1 hour, the weight W4(g) was measured.

Using each of the measured weights, the Absorbency under pressure(g/g) was calculated according to the following Equation 3.

[Equation 3]

$$AUP(g/g) = [W4(g) - W3(g)]/W0(g)$$

The above measurement was repeated 5 times, and the average value and standard deviation were obtained.

**(3) Vortex time (Absorption rate)**

The vortex time was measured according to the Japanese standard method (JIS K 7224). More specifically, 2 g of the super absorbent polymer was added to 50 mL of physiological saline at 25°C, and stirred with a magnetic bar (diameter 8 mm, length 31.8 mm) at 600 rpm, and after stopping the stirring, the amount of time required for the vortex to disappear was measured in seconds to calculate the vortex time

(3) Content of water-soluble-components

The content of water-soluble-components was measured according to the EDANA WSP 270.2.

The measurement results are summarized in Table below.

Table 1

| | Internal crosslinking agent | | Physical properties of SAP | | | |
|---|---|---|---|---|---|---|
| | PETTAE (g) | PEGDA (g) | CRC (g/g) | 1h E/C (%) | 0.3 AUP (g/g) | Vortex (sec) |
| Example 1 | 0.2 | 0.15 | 36.3 | 2.5 | 33.8 | 24 |
| Example 2 | 0.2 | 0.3 | 35.7 | 2.4 | 34.1 | 23 |
| Example 3 | 0.25 | 0.1 | 35.8 | 2.4 | 34.2 | 24 |
| Comparative Example 1 | 0.35 | - | 32.8 | 2.3 | 34.4 | 23 |
| Comparative Example 2 | 0.50 | - | 31.2 | 2.1 | 34.7 | 23 |
| Comparative Example 3 | - | 0.2 | 45.1 | 25.8 | 19.3 | 31 |

Referring to Table above, it can be confirmed that the super absorbent polymer prepared according to Examples of the present disclosure has excellent crosslinking degree, so that the content of water-soluble components is small, and the absorption-related physical properties such as CRC and AUP are evenly excellent.

However, it can be confirmed that in Comparative Example 3 using only a polyfunctional acrylate-based compound as an internal crosslinking agent, the content of water-soluble components increased significantly and the absorbency under pressure was greatly reduced, and at the same time, the vortex time was also greatly deteriorated. Further, it can be confirmed that in the case of Comparative Examples 1 and 2, in which only the polyfunctional allyl-based compound was used as the internal crosslinking agent, the centrifuge retention capacity value was significantly reduced.

## Claims

1. A method for preparing a super absorbent polymer, comprising the steps of:

   step 1: polymerizing a monomer composition containing a water-soluble ethylenically unsaturated monomer having an acidic group, an internal crosslinking agent, and a polymerization initiator to form a polymer in which the water-soluble ethylenically unsaturated monomer having an acidic group and the internal crosslinking agent are subjected to a crosslinking polymerization;
   step 2: neutralizing at least a part of the acidic group of the polymer to form a hydrogel polymer;
   step 3: micronizing the polymer in the presence of a surfactant; and
   step 4: drying the neutralized and micronized polymer to prepare dried super absorbent polymer particles,
   wherein the internal crosslinking agent comprises i) a polyfunctional acrylate-based compound, and ii) any one or more of a polyfunctional allyl-based compound and a polyfunctional vinyl-based compound.

2. The method for preparing a super absorbent polymer according to claim 1 wherein:
   the polyfunctional acrylate-based compound comprises at least one selected from the group consisting of ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, tripropylene glycol di(meth)acrylate, polypropylene glycol di(meth)acrylate, butanediol di(meth)acrylate, butylene glycol di(meth)acrylate, hexanediol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, trimethylolpropane di(meth)acrylate, trimethylolpropane tri(meth)acrylate, glycerin di(meth)acrylate, and glycerin tri(meth)acrylate.

3. The method for preparing a super absorbent polymer according to claim 1 wherein:
   the polyfunctional allyl-based compound comprises at least one selected from the group consisting of ethylene glycol diallyl ether, diethylene glycol diallyl ether, triethylene glycol diallyl ether, tetraethylene glycol diallyl ether, polyethylene glycol diallyl ether, propylene glycol diallyl ether, tripropylene glycol diallyl ether, polypropylene glycol diallyl ether, butanediol diallyl ether, butylene glycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane

triallyl ether, glycerin diallyl ether, and glycerin triallyl ether.

**4.** The method for preparing a super absorbent polymer according to claim 1 wherein:
the polyfunctional vinyl-based compound comprises at least one selected from the group consisting of ethylene glycol divinyl ether, diethylene glycol divinyl ether, triethylene glycol divinyl ether, tetraethylene glycol divinyl ether, polyethylene glycol divinyl ether, propylene glycol divinyl ether, tripropylene glycol divinyl ether, polypropylene glycol divinyl ether, butanediol divinyl ether, butylene glycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentavinyl ether, trimethylolpropane divinyl ether, trimethylolpropane trivinyl ether, glycerin divinyl ether, and glycerin trivinyl ether.

**5.** The method for preparing a super absorbent polymer according to claim 1 wherein:
the internal crosslinking agent is used in an amount of 0.01 to 10 parts by weight with respect to 100 parts by weight of the water-soluble ethylenically unsaturated monomer.

**6.** The method for preparing a super absorbent polymer according to claim 1 wherein:
the polyfunctional acrylate-based compound is used in an amount of 10 to 200 parts by weight with respect to 100 parts by weight of the total weight of any one or more compounds of the polyfunctional allyl-based compound and a polyfunctional vinyl-based compound.

**7.** The method for preparing a super absorbent polymer according to claim 1 wherein:
the step of drying the neutralized and micronized polymer is performed by a moving type drying.

**8.** The method for preparing a super absorbent polymer according to claim 7 wherein:
the moving type drying is performed using a horizontal-type mixer, a rotary kiln, a paddle dryer, or a steam tube dryer.

**9.** The method for preparing a super absorbent polymer according to claim 1 wherein:
the step of drying the neutralized and micronized polymer is performed at a temperature of 150°C or less.

**10.** The method for preparing a super absorbent polymer according to claim 1 wherein:
the dried super absorbent polymer particles obtained by drying the neutralized and micronized polymer has a moisture content of 10 to 20 wt.%.

**11.** The method for preparing a super absorbent polymer according to claim 1 wherein:
at least a part of the surfactant is present on the surface of the hydrogel polymer.

**12.** The method for preparing a super absorbent polymer according to claim 1 wherein:

the surfactant comprises a compound represented by the following Chemical Formula 2 or a salt thereof:

[Chemical Formula 2]

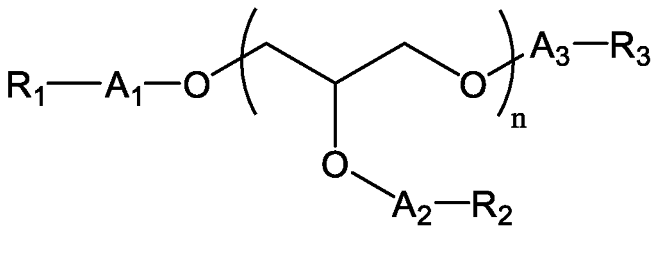

wherein, in Chemical Formula 2,
$A_1$, $A_2$ and $A_3$ are each independently a single bond, carbonyl,

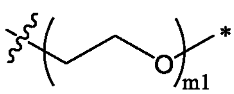, 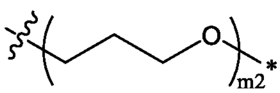 or 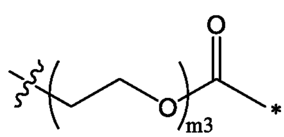,

provided that one or more thereof are carbonyl or

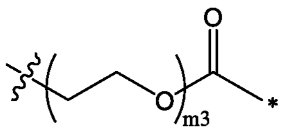
,

where m1, m2 and m3 are each independently an integer of 1 to 8, each

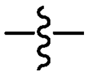

is connected to an adjacent oxygen atom, and

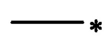

is connected to adjacent $R_1$, $R_2$ an $R_3$, respectively,
$R_1$, $R_2$ and $R_3$ are each independently hydrogen, a linear or branched alkyl having 6 to 18 carbon atoms, or a linear or branched alkenyl having 6 to 18 carbon atoms, and
n is an integer of 1 to 9.

**13.** The method for preparing a super absorbent polymer according to claim 1 wherein:
the super absorbent polymer particles contain 89 wt.% or more of super absorbent polymer particles having a particle size of 150 $\mu$m to 850 $\mu$m with respect to the total weight of the super absorbent polymer particles.

**14.** The method for preparing a super absorbent polymer according to claim 1 wherein:
the super absorbent polymer particles contain 5 wt.% or less of super absorbent polymer particles having a particle size of less than 150 $\mu$m with respect to the total weight of the super absorbent polymer particles.

**15.** The method for preparing a super absorbent polymer according to claim 1, further comprising:
pulverizing the dried super absorbent polymer particles and classifying them in accordance with particle sizes.

**16.** The method for preparing a super absorbent polymer according to claim 1 or 15, further comprising:
forming a surface crosslinked layer on at least a part of the surface of the super absorbent polymer particles.

**17.** The method for preparing a super absorbent polymer according to claim 16 wherein:

after the step of forming a surface crosslinked layer on at least a part of the surface of the super absorbent polymer particles,
the method further comprises any one or more steps of: a cooling step of cooling the super absorbent polymer particles on which the surface crosslinked layer is formed; a water addition step of adding water to the super absorbent polymer particles on which the surface crosslinked layer is formed; and a post-treatment step of adding an additive to the super absorbent polymer particles on which the surface crosslinked layer is formed.

**18.** The method for preparing a super absorbent polymer according to claim 17 wherein:
the cooling step, the water addition step, and the post-treatment step are performed simultaneously.

**19.** A super absorbent polymer comprising:

a polymer in which a water-soluble ethylenically unsaturated monomer having an acidic group and the internal crosslinking agent are subjected to a crosslinking polymerization, with at least a part of the acidic group of the polymer being neutralized, and
a surface crosslinked layer formed on the polymer by further crosslinking the polymer via a surface crosslinking agent;
wherein a vortex time is less than 30 seconds, and

wherein a content of water-soluble components measured after swelling for 1 hour according to the EDANA WSP 270.3 is 5 wt.% or less.

**20.** The super absorbent polymer according to claim 19, wherein:
an absorbency under pressure (AUP) under 0.3 psi measured according to the EDANA WSP 242.3 is 25 g/g to 40 g/g.

【FIG. 1】

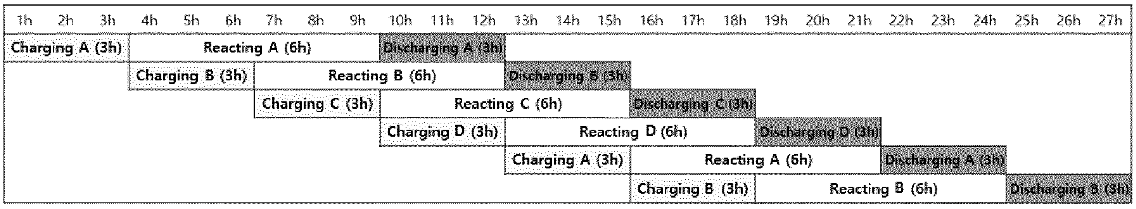
1h 2h 3h 4h 5h 6h 7h 8h 9h 10h 11h 12h 13h 14h 15h 16h 17h 18h 19h 20h 21h 22h 23h 24h 25h 26h 27h
Charging A (3h)
Reacting A (6h)
Discharging A (3h)
Charging B (3h)
Reacting B (6h)
Discharging B (3h)
Charging C (3h)
Reacting C (6h)
Discharging C (3h)
Charging D (3h)
Reacting D (6h)
Discharging D (3h)
Charging A (3h)
Reacting A (6h)
Discharging A (3h)
Charging B (3h)
Reacting B (6h)
Discharging B (3h)

【FIG. 2】

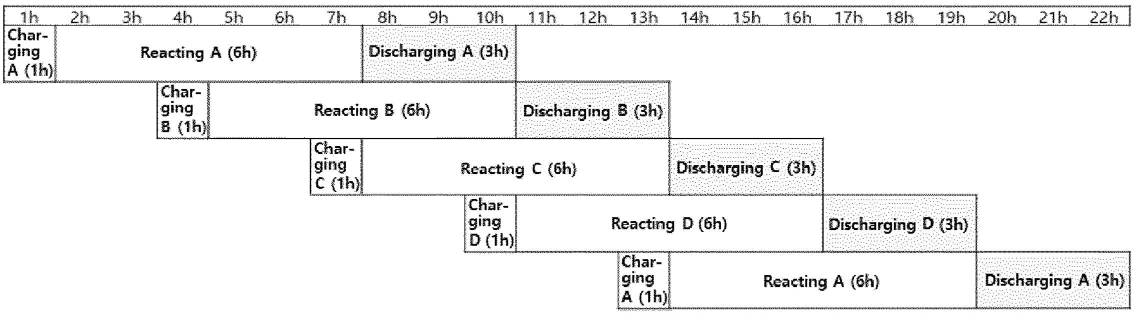
1h 2h 3h 4h 5h 6h 7h 8h 9h 10h 11h 12h 13h 14h 15h 16h 17h 18h 19h 20h 21h 22h
Char-ging A (1h)
Reacting A (6h)
Discharging A (3h)
Char-ging B (1h)
Reacting B (6h)
Discharging B (3h)
Char-ging C (1h)
Reacting C (6h)
Discharging C (3h)
Char-ging D (1h)
Reacting D (6h)
Discharging D (3h)
Char-ging A (1h)
Reacting A (6h)
Discharging A (3h)

## INTERNATIONAL SEARCH REPORT

International application No.
**PCT/KR2022/008723**

### A. CLASSIFICATION OF SUBJECT MATTER

**C08J 3/12**(2006.01)i; **C08J 3/24**(2006.01)i; **C08J 3/075**(2006.01)i; **C08F 220/06**(2006.01)i; **B29B 9/12**(2006.01)i; **C08F 2/01**(2006.01)i

According to International Patent Classification (IPC) or to both national classification and IPC

### B. FIELDS SEARCHED

Minimum documentation searched (classification system followed by classification symbols)

C08J 3/12(2006.01); C08F 2/00(2006.01); C08F 20/04(2006.01); C08F 220/06(2006.01); C08F 4/30(2006.01); C08F 6/06(2006.01); C08J 3/075(2006.01); C08J 3/24(2006.01); C08J 9/06(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고흡수(absorbent, super-absorbent, SAP), 아크릴레이트(acrylate), 계면활성제(surfactant), 미립화(grind, atomize, pulverize, mill, crush), 건조(dry), 가교제(crosslinking agent), 다관능 아크릴레이트(multi-functional acrylate), 다관능 알릴 화합물(multi-functional allyl compound), 다관능 비닐 화합물(multi-functional vinyl compound)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0077541 A (NIPPON SHOKUBAI CO., LTD.) 03 July 2019 (2019-07-03)<br>See abstract; claims 1 and 2; paragraphs [0112], [0115], [0151], [0152], [0186], [0239], [0263], [0264], [0309], [0314]-[0319], [0322], [0401]-[0405], [0426], [0427], [0460], [0462], [0476], [0483] and [0484]; and figures 1 and 2. | 1-20 |
| Y | JP 2009-052009 A (SANYO CHEM. IND. LTD.) 12 March 2009 (2009-03-12)<br>See claim 1; and paragraph [0082]. | 1-3,5-20 |
| Y | CN 1872890 A (HUAYI ACRYLIC ACID CO., LTD., SHANGHAI) 06 December 2006 (2006-12-06)<br>See claims 1, 7 and 10; pages 3 and 4; and examples 1 and 4. | 1,2,4-20 |
| X | KR 10-2019-0069101 A (LG CHEM, LTD.) 19 June 2019 (2019-06-19)<br>See claims 1 and 8; and paragraph [0300], example 18. | 19,20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2022** | **30 September 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

## INTERNATIONAL SEARCH REPORT

International application No.
**PCT/KR2022/008723**

**C. DOCUMENTS CONSIDERED TO BE RELEVANT**

| Category* | Citation of document, with indication, where appropriate, of the relevant passages | Relevant to claim No. |
|---|---|---|
| Y | JP 2016-124901 A (NIPPON SHOKUBAI CO., LTD.) 11 July 2016 (2016-07-11)<br>See abstract; claims 1 and 6-8; and paragraphs [0085], [0086], [0092], [0093], [0102], [0116]-[0119], [0128], [0172] and [0179]-[0197]. | 1-20 |
| Y | JP 59-030826 A (CASSELLA FARBWERKE MAINKUR AG) 18 February 1984 (1984-02-18)<br>See claim 1; and page 4, the top of the left column. | 12 |
| A | KR 10-2020-0055648 A (LG CHEM, LTD.) 21 May 2020 (2020-05-21)<br>See claims 1-14. | 1-20 |

Form PCT/ISA/210 (second sheet) (July 2019)

**INTERNATIONAL SEARCH REPORT**
**Information on patent family members**

International application No.
**PCT/KR2022/008723**

| Patent document cited in search report | Publication date (day/month/year) | Patent family member(s) | Publication date (day/month/year) |
|---|---|---|---|
| KR 10-2019-0077541 A | 03 July 2019 | CN 109996833 A | 09 July 2019 |
| | | CN 109996833 B | 11 February 2022 |
| | | CN 109996835 A | 09 July 2019 |
| | | EP 3543279 A1 | 25 September 2019 |
| | | EP 3543280 A1 | 25 September 2019 |
| | | JP 2019-052285 A | 04 April 2019 |
| | | JP 6800998 B2 | 16 December 2020 |
| | | JP 6913107 B2 | 04 August 2021 |
| | | JP 6918407 B2 | 11 August 2021 |
| | | KR 10-2019-0077540 A | 03 July 2019 |
| | | US 2019-0329219 A1 | 31 October 2019 |
| | | US 2019-0329220 A1 | 31 October 2019 |
| | | WO 2018-092863 A1 | 24 May 2018 |
| | | WO 2018-092864 A1 | 24 May 2018 |
| JP 2009-052009 A | 12 March 2009 | None | |
| CN 1872890 A | 06 December 2006 | CN 100398573 C | 02 July 2008 |
| KR 10-2019-0069101 A | 19 June 2019 | None | |
| JP 2016-124901 A | 11 July 2016 | JP 6425341 B2 | 21 November 2018 |
| JP 59-030826 A | 18 February 1984 | DE 3221947 A1 | 22 December 1983 |
| | | EP 0096790 A1 | 28 December 1983 |
| | | EP 0096790 B1 | 16 December 1987 |
| | | JP 03-073576 B2 | 22 November 1991 |
| KR 10-2020-0055648 A | 21 May 2020 | CN 111436201 A | 21 July 2020 |
| | | EP 3680277 A1 | 15 July 2020 |
| | | JP 2021-510741 A | 30 April 2021 |
| | | JP 6973874 B2 | 01 December 2021 |
| | | KR 10-2418591 B1 | 07 July 2022 |
| | | US 2021-0147640 A1 | 20 May 2021 |
| | | WO 2020-101167 A1 | 22 May 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210079644
- KR 1020210080230


### Non-patent literature cited in the description


- **ODIAN.** Principle of Polymerization. Wiley, 1981, 203